# FASCICULE DE BREVET EUROPEEN

(11) **EP 1 866 685 B1**
(45) Date de publication et mention de la délivrance du brevet: **08.02.2012**
(21) Numéro de dépôt: 06755540.9
(22) Date de dépôt: 05.04.2006
(51) Int. Cl.: G02B 6/36

(54) **PROCEDE DE FABRICATION D'ELEMENTS COMPORTANT DES FIBRES OPTIQUES, DISPOSITIF DE MISE EN UVRE D'UN TEL PROCEDE, ELEMENT A FIBRES OPTIQUES ET DISPOSITIF OPTIQUE COMPORTANT UN TEL ELEMENT**
VERFAHREN ZUR HERSTELLUNG VON ELEMENTEN MIT LICHTWELLENLEITERN, VORRICHTUNG ZUR DURCHFÜHRUNG DES VERFAHRENS, LICHTWELLENLEITERELEMENT UND OPTISCHE VORRICHTUNG DAMIT
METHOD FOR MAKING ELEMENTS COMPRISING OPTICAL FIBERS, DEVICE FOR IMPLEMENTING SAID METHOD, FIBER OPTIC ELEMENT AND OPTICAL DEVICE COMPRISING SAME

(30) Priorité: 06.04.2005 FR 0503426
(43) Date de publication de la demande: 19.12.2007
(60) Demande divisionnaire: 10160669.7
(73) Titulaire: Commissariat à l'Énergie Atomique et aux Énergies Alternatives, 75015 Paris (FR)
(72) Inventeur: MARTINEZ, Christophe, F-38100 GRENOBLE (FR); GILBERT, Karen, F-38340 LE CHEVALON DE VOREPPE (FR)
(74) Mandataire: Poulin, Gérard
(86) Numéro de dépôt international: PCT/FR2006/050299
(87) Numéro de publication internationale: WO 2006/106266

(56) Documents cités:
- EP-A- 1 219 992

## Description

La présente invention se rapporte à un procédé de fabrication d'éléments comportant des fibres optiques dans des positions déterminées, à un dispositif pour la mise en oeuvre dudit procédé, aux éléments de fibres optiques obtenus par ledit procédé et aux dispositifs optiques, en particulier optoélectroniques comportant de tels éléments.

Les fibres optiques sont utilisées dans de nombreux dispositifs optoélectroniques tels que les dispositifs de télécommunications optiques, les datacoms et les capteurs optiques. Les fibres optiques permettent de guider des faisceaux optiques entre les différents noeuds et composants utilisés dans ces dispositifs. Parmi ces composants, on peut citer les sources optiques, les détecteurs, les analyseurs de spectre, les amplificateurs, les atténuateurs, et les commutateurs. Cependant, la connexion entre les extrémités des fibres optiques et l'entrée ou la sortie du composant, pose de nombreux problèmes, ce qui freine l'utilisation à grande échelle de tels dispositifs.

Actuellement, afin d'obtenir des ensembles de fibres optiques, dans lesquels les fibres optiques sont disposées de manière précise les unes par rapport aux autres, sont employés des supports appelés V-groove en terminologie anglaise, munis de rainures longitudinales à section en V, précisément ajustées, dans lesquelles sont positionnées les fibres optiques. Cette technique est décrite dans le document US 6,795,634 B2. Ensuite une contre-lame est disposée sur les fibres optiques à l'opposée du support à rainures. Une résine ou une colle est ensuite introduite entre la plaque et le support à rainures. Une structure en sandwich unitaire est alors obtenue. La structure est de forme parallélépipédique, d'où sortent les fibres optiques, et peut être facilement manipulée et positionnée.

Les rainures à section en V sont réalisées principalement par usinage chimique par des procédés de lithographie ou par usinage par trait de scie.

Même si le coût de revient d'un support muni de rainures de forme simple reste commercialement acceptable, il reste élevé par rapport à d'autres technologies et empêche les dispositifs utilisant des fibres optiques, d'être financièrement vraiment intéressants. En outre, lorsque les dispositifs nécessitent des répartitions spécifiques de fibres optiques, le prix de revient des supports à rainures devient prohibitif.

De plus, dans le cas où l'élément à fibres optiques comporte des fibres optiques distribuées sur plusieurs couches (assemblage des fibres en matrice), il n'existe actuellement aucun procédé de réalisation simple.

C'est par conséquent un but de la présente invention d'offrir un procédé simple de réalisation d'éléments de fibres optiques.

C'est également un but de la présente invention d'offrir un procédé de réalisation d'éléments de fibres optiques de structure complexe.

C'est également un but de la présente invention d'offrir un procédé de réalisation d'éléments de fibres optiques à prix de revient compétitif.

### EXPOSÉ DE L'INVENTION

Les buts précédemment énoncés sont atteints par un procédé dans lequel le support à rainures est utilisé comme moule réutilisable et non comme support intégré à l'élément final. Ainsi, même si le moule est de forme complexe et de prix de revient élevé, son usage répété permet d'amortir son coût et ainsi de réaliser des éléments à faible prix de revient.

En d'autres termes, le support à rainures ne sert plus de support mais uniquement de moule, les fibres optiques sont maintenues par une matière durcissable et éventuellement par des supports de formes simples.

Le fait d'utiliser un moule unique améliore la répétabilité du procédé de réalisation de la structure de l'élément à fibres optiques.

En outre, ce procédé permet de réaliser des éléments à fibres optiques ayant des réseaux de fibres optiques complexes.

La présente invention a alors principalement pour objet un procédé de réalisation d'un élément muni de plusieurs fibres optiques disposées dans des positions déterminées, comportant les étapes :
- de mise en place et de maintien des fibres optiques dans des rainures pratiquées dans une plaque,
- d'injection d'une matière durcissable adhérant aux fibres,
- de solidification de la matière durcissable pour figer les fibres dans la position fixée par les rainures,
- de retrait au moins de la plaque rainurée formant moule.

La matière durcissable est, par exemple une résine.

De manière avantageuse, le maintien des fibres est également assuré par une plaque support, disposée sur les fibres optiques à l'opposé de la plaque formant moule. La matière durcissable peut alors être injectée entre la plaque rainurée et la plaque support.

De façon avantageuse, le procédé selon l'invention permet de former un élément à fibres optiques à structure matricielle par la répétition des étapes ci-dessus énoncées.

En outre, le procédé selon la présente invention comporte également une étape de solidification de la matière durcissable, par exemple, par insolation lumineuse ou chauffage de la matière durcissable.

Avantageusement, l'insolation lumineuse de la résine s'effectue dans l'ultraviolet et la plaque formant moule et/ou la plaque support est réalisée en matériau transparent aux rayons ultraviolets.

Dans un exemple, le procédé selon la présente invention peut également comporter une étape de collage d'une plaque support en lieu et place de la plaque de moulage.

Dans un autre exemple, le procédé selon l'invention comporte l'étape de collage de l'élément directement sur une structure de report d'un dispositif optique. Dans ce cas, la structure de report peut comporter des rainures correspondant aux rainures de la plaque de moulage. Ceci permet une interpénétration entre l'élément à fibres optiques et la structure, et assure un positionnement déterminé entre l'élément à fibres optiques et la structure. L'interface entre la structure de report et l'élément à fibres optiques peut également être plane.

Dans un autre exemple, la structure de report ou la plaque support comporte une tranchée dimensionnée de manière à ce que, au début de l'étape de collage, l'élément à fibres optiques ne repose sur la structure de report ou sur la plaque support que par ses extrémités latérales.

De façon avantageuse, les fibres optiques sont clivées avant leur mise en place dans la plaque de moulage.

Le procédé de réalisation selon l'invention peut également comporter une étape de polissage des extrémités des fibres optiques ; de manière avantageuse, cette étape de polissage des extrémités des fibres optiques a lieu avant le retrait de la plaque formant moule.

La présente invention a également pour objet un dispositif de mise en oeuvre du procédé selon l'invention, caractérisé en ce qu'il comporte au moins une plaque de moulage munie de premières rainures longitudinales sur une première face, et en ce que ladite première face possède des propriétés de faible adhésion vis-à-vis de la matière durcissable destinée à être injectée entre la plaque de moulage et la plaque support.

Dans un exemple de réalisation, la plaque de moulage comporte également des deuxièmes rainures longitudinales de profondeur supérieure à celle des premières rainures longitudinales.

Par exemple, la première face reçoit un traitement du type C₄F₈ ou OMCTS ou SiOC obtenu par dépôt plasma.

Selon un exemple de réalisation, les rainures sont de profondeurs différentes de manière à définir des plans parallèles distincts pour les fibres optiques.

Selon un autre exemple de réalisation, les rainures se trouvent dans le fond d'une tranchée, ladite tranchée formant sur la surface d'un premier élément à fibres optiques des moyens de positionnement par rapport à une deuxième plaque de moulage.

Avantageusement, la deuxième plaque de moulage comporte une tranchée à fond plan, de manière à obtenir après moulage sur le premier élément à fibres optiques d'une face plane, un deuxième élément à fibres optiques muni d'une face plane.

En outre le dispositif comporte une troisième plaque de moulage munie d'une tranchée à fond rainurée afin de recevoir des fibres optiques, la profondeur de la tranchée étant telle que lorsque le deuxième élément est placé dans la tranchée, la face plane du deuxième élément est en appui sur les fibres optiques.

De façon avantageuse, le ou les plaques de moulage comportent des tranchées d'alimentation des rainures en résine.

Préférentiellement, les tranchées ont une section transversale trapézoïdale.

Les plaques de moulage peuvent être formées dans un substrat en silicium gravé chimiquement par photolithogravure ou au moyen d'une scie.

Par exemple, les rainures sont à section transversale en V, les branches du V formant un angle de 70.6° et les rainures sont espacées les unes des autres d'une distance de 250µm, correspondant à une taille standard d'une fibre optique.

La présente invention a également pour objet un élément à fibres optiques obtenu par un procédé selon l'invention.

Avantageusement, la lame support est en verre, et notamment en pyrex ^{®}.

Dans un exemple avantageux, l'élément à fibres optiques comporte une lame support munie d'une tranchée au droit des fibres optiques.

Dans un exemple particulier, la lame support comporte une face formée par au moins deux plans parallèles décalés et destinés à venir en appui sur les fibres optiques disposées dans des plans parallèles décalés correspondant.

La présente invention a également pour objet un dispositif à fibres optiques comportant un élément selon l'invention.

### BRÈVE DESCRIPTION DES DESSINS

La présente invention sera mieux comprise à l'aide de la description qui va suivre et des figures annexées pour lesquelles le haut et le bas correspondent respectivement aux parties supérieures et inférieures des dessins et sur lesquelles :
- la figure 1a est une vue en perspective d'un élément à fibres optiques obtenu par un procédé selon la présente invention,
- la figure 1b est une vue en perspective d'un élément à fibres optiques de l'art antérieur,
- les figures 2a à 2f sont des étapes d'un premier exemple de procédé selon la présente invention,
- les figures 3a à 3c sont des étapes d'un deuxième exemple de procédé selon la présente invention,
- les figures 4a à 4f sont des étapes d'un troisième exemple d'un procédé selon la présente invention de réalisation d'un élément comportant des fibres optiques disposées dans des plans distincts,
- les figures 5a à 5h sont des étapes d'un quatrième exemple d'un procédé de réalisation selon la présente invention d'un élément comportant des fibres optiques assemblées en matrice,
- la figure 6 est une vue en perspective d'une plaque de moulage de mise en oeuvre du procédé selon la présente invention,
- les figures 7a et 7b sont des étapes de fabrication d'un dispositif muni d'un élément à fibres optiques selon la présente invention,
- la figure 7c est une vue en perspective d'un dispositif optique de l'état de la technique,
- les figures 8a à 8c sont des étapes de mise en forme d'un élément à fibres optiques selon la présente invention,
- les figures 9a à 9e sont des étapes d'un autre exemple d'un procédé de réalisation selon la présente invention d'un élément à fibres optiques assemblées.en matrice,
- les figures 10a à 10f sont des étapes d'un autre exemple d'un procédé de réalisation selon la présente invention d'un élément à fibres optiques,
- les figures 11a à 11f sont des étapes d'un autre exemple d'un procédé de réalisation selon la présente invention d'un élément à fibres optiques.

### EXPOSÉ DÉTAILLÉ DE MODES DE RÉALISATION PARTICULIERS

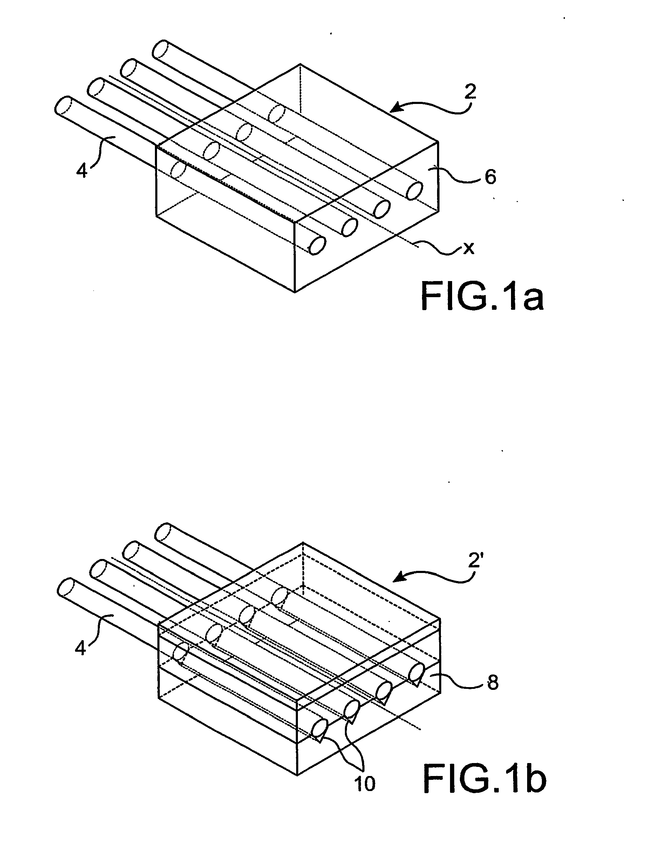

Sur la figure 1a, on peut voir un exemple d'un élément 2 à fibres optiques selon la présente invention, comportant des fibres optiques 4 alignées selon un direction longitudinale X et maintenues dans une position déterminée par une armature 6 de maintien en résine. Cet ensemble 2, selon la présente invention, ne comporte pas, contrairement aux éléments 2' à fibres optiques de l'état de la technique, dont un élément est représenté en figure 1b, une plaque support 8 munie des rainures 10 en V, dans lesquelles sont positionnées les fibres optiques avant d'être noyées dans une résine, la plaque support faisant ensuite définitivement partie de l'élément à fibres optiques.

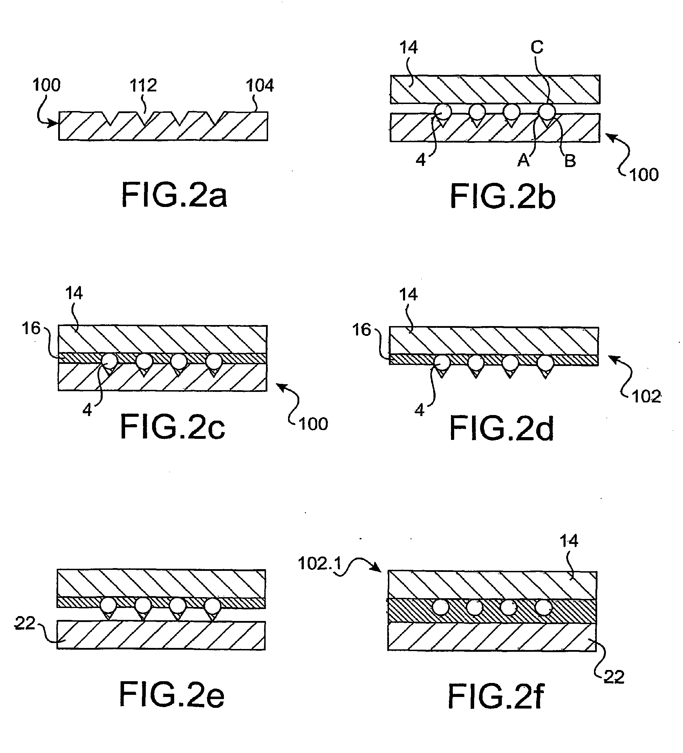

Sur les figures 2a à 2f, on peut voir les différentes étapes d'un premier exemple de procédé selon la présente invention, comportant les étapes :
- de mise en place de plusieurs fibres optiques 4 dans les rainures 112 d'une plaque rainurée ou de moulage 100,
- de dépôt d'une plaque support 14 sur les fibres optiques à l'opposé de la plaque de moulage 100,
- d'injection d'une matière durcissable entre la plaque de moulage 100 et la plaque support 14,
- de traitement de la matière durcissable de manière à la durcir,
- d'ablation de le plaque de moulage 100. Nous allons maintenant décrire en détail le procédé selon la présente invention.

La plaque de moulage 100 de forme sensiblement rectangulaire, comporte des rainures longitudinales 112 pratiquées dans une surface supérieure 104 de la plaque 100. Dans l'exemple représenté, les rainures ont une section transversale en V (Figure 2a).

Les fibres optiques 4 ont la forme d'un cylindre régulier de grande longueur, relativement à leur diamètre.

Les fibres optiques 4 sont disposées dans les rainures 112 de manière à ce que, sur une section transversale, la fibre optique repose dans la rainure 112 en deux points A et B. La plaque support 14, formée par exemple d'une lame plane, appelée contre-lame, est déposée sur les fibres optiques à l'opposée de la plaque de moulage 100 et est en contact avec chacune des fibres en un point C en considérant une section transversale (Figure 2b). Le positionnement de chaque fibre est ainsi généralement garanti à 1 µm près. La plaque support 14 est de forme adaptée au maintien des fibres dans les rainures 112 pendant les étapes d'injection et de durcissement de la résine, quelque soit la forme de la plaque de moulage et la distribution des fibres. D'autres moyens de maintien permettant le retrait ultérieur de la plaque de moulage, peuvent également être prévus.

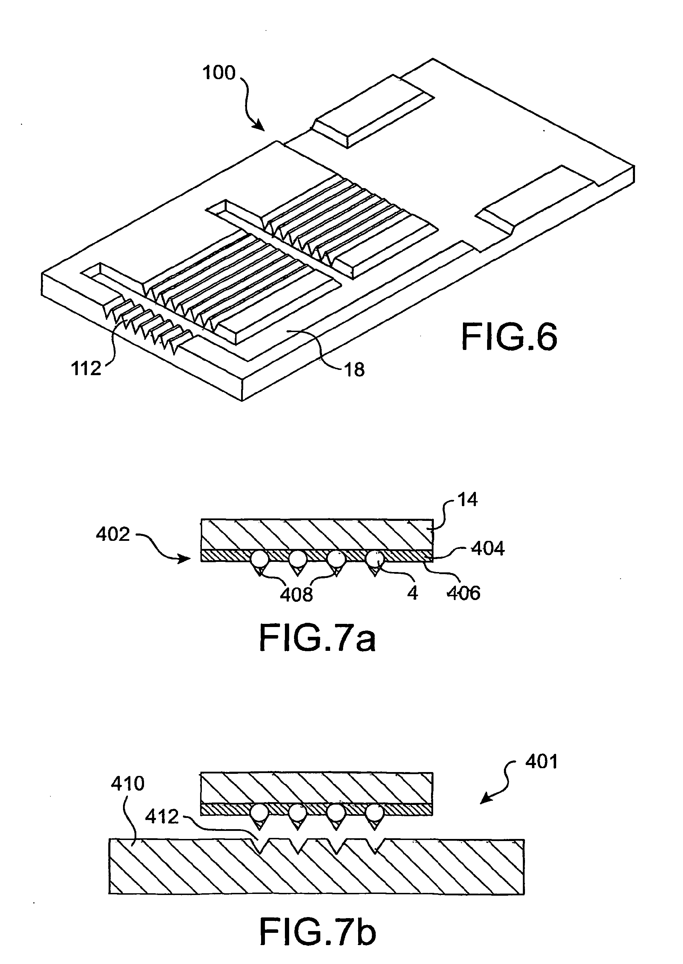

Dans une étape ultérieure, une résine 16, par exemple de type polymère liquide, ou plus généralement un matériau durcissable, liquide de plus ou moins grande viscosité, adhérant aux fibres optiques, par exemple un sol gel adapté, est ensuite injectée entre le moule 100 et la plaque support 14. Cette résine pénètre dans tout l'espace délimité entre le moule 100 et la plaque support 14, en particulier entre le moule 100 et les fibres optiques. De manière avantageuse, on peut prévoir des tranchées 18 d'alimentation en résine, usinées dans le moule 100 (Figure 6), permettant à la résine de circuler vers les rainures. On peut également prévoir de déposer la résine avant la mise en place de la plaque support.

Ensuite, la résine 16 est solidifiée par exemple par réticulation. Suivant le type de résine employé, la réticulation est obtenue par insolation lumineuse, par exemple dans l'ultraviolet (UV) et/ou par chauffage, ou par tout autre méthode connue de l'homme du métier en fonction du type de matériau durcissable utilisé. Dans le cas de l'insolation lumineuse, il est préférable d'utiliser des matériaux transparents dans la bande spectrale concernée, pour réaliser le moule 100 et/ou la plaque support 14. Avantageusement, la plaque support 14 est réalisée en verre, notamment en pyrex ^{®} qui est effectivement transparent aux rayons UV.

A titre d'exemple, un type de résine polymère qui peut être utilisée est une résine époxy ayant comme dénomination commerciale EPO-TEK OG198-50^{®} commercialisée par la Société EPOTEK.

Lorsque la résine 16 est solidifiée, l'élément 102 formé par les fibres optiques 4 piégées dans la résine 16 solide et la contre-lame 14, est démoulé du moule 100 (Figure 2d). Pour réaliser ce démoulage, on prévoit un moule 100, dont la surface 104 destinée à être en contact avec la résine 16, a de préférence des propriétés de faible adhérence ou d'anti-adhésion par rapport à la résine, afin de permettre un démoulage facilité de l'élément à fibres, optiques. Pour cela on peut prévoir, par exemple, d'appliquer un traitement à la plaque de moulage 100 de telle sorte qu'elle n'adhère pas à la résine. Il peut s'agir par exemple d'un traitement de type C₄F₈ (perfluorocyclobutane) obtenu par dépôt plasma ou un traitement OMCTS (Octamethylcyclotetrasiloxane) ou SiOC également obtenu par plasma connu de l'homme du métier.

De préférence, un tel traitement garantit, en plus de la non adhérence de la résine réticulée sur le premier support 100, une mouillabilité suffisante pour permettre à la résine non réticulée de remplir complètement l'espace délimité par les plaques 100,14.

Toutes les plaques de moulage utilisées en tant que moule dans les différents exemples de procédé selon la présente invention, peuvent être traitées de la manière décrite précédemment ou de manière analogue, de façon à ce qu'elles aient cette propriété d'anti-adhésion ou pour le moins d'adhésion faible par rapport à la résine.

Dans l'exemple décrit précédemment, la plaque support 14 fait partie intégrante de l'élément à fibres optiques, ce qui permet de le rigidifier. Pour cela, il est préférable que la résine adhère bien à cette plaque support 14. Cependant il est bien entendu, que l'on peut également prévoir une ablation de cette plaque support 14. A cette fin, un traitement préalable, tel que précédemment décrit pourra être réalisé sur la plaque support 14.

On peut également prévoir afin d'augmenter la rigidité de l'élément 102 de disposer sur une face inférieure 106 de l'élément 102, auparavant en contact de la plaque de moulage 100, une deuxième plaque support 22. Afin de rendre cette deuxième plaque 22 solidaire de l'ensemble 102, on injecte à nouveau une résine entre la deuxième plaque support 22 et l'élément 102, cette résine peut être la résine 16 précédemment utilisée ou une autre résine compatible avec la résine 16, et plus généralement un autre matériau de plus ou moins grande viscosité, pouvant se solidifier (par exemple un sol gel) et compatible avec le premier matériau utilisé pour maintenir les fibres optiques.

Un traitement de solidification est ensuite réalisé de la même manière que précédemment. On obtient alors un élément à fibres optiques 108 comportant des faces supérieure et inférieure planes, très facilement manipulable.

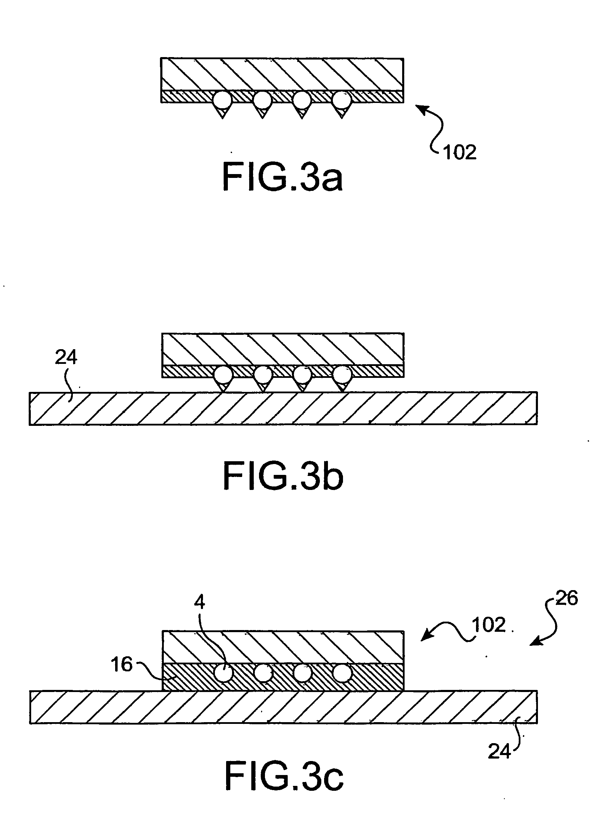

Il est bien entendu que l'ajout de la deuxième plaque support 22 à l'élément 102, peut être évité, notamment dans le cas où, par exemple, l'élément 102 est destiné à être solidarisé sur une structure 24 d'un dispositif 26, qui assure lui-même la rigidité de l'élément 102 (Figures 3a à 3c). La solidarisation de l'élément 102 à la structure 24 s'effectue, par exemple et comme précédemment décrit, par insertion de résine et solidification de celle-ci.

Si les fibres ont été clivées préalablement à leur enfouissement dans la résine 16, c'est-à-dire si elles ont été coupées à leur extrémité afin que les faisceaux optiques sortant des fibres ne soient pas déformés par le passage par le dioptre fibre, et si la précision de l'alignement des fibres en extrémité de l'assemblage est suffisante pour l'application recherchée, l'élément à fibres optiques peut être utilisé directement dans un dispositif ou commercialisé.

Par contre, si les fibres ne sont pas clivées ou si l'alignement des extrémités des fibres n'est pas suffisant, on peut prévoir un polissage par les techniques habituelles de polissage de fibres optiques non détaillées ici.

Si l'on souhaite réaliser un polissage, l'élément 102.1 comportant un premier et une deuxième plaques supports, est avantageux puisqu'il est plus facilement manipulable.

Il est à noter que certaines des résines utilisables pour réaliser les éléments selon la présente invention, ont comme caractéristique de subir un retrait lors de leur réticulation. Il est alors préférable de tenir compte de ce retrait lors de la réalisation de rainures en V.

La première plaque support est, par exemple formée d'un substrat en silicium, sur lequel sont gravées sur la face supérieure les rainures en V et les canaux de circulation, par exemple par photolithogravure. Lors du dimensionnement de la plaque de moulage, on tient compte du diamètre de la fibre dénudée, par exemple 125 µm et du pas souhaité entre les fibres, qui est habituellement, pour le diamètre indiqué ci-dessus de fibres optiques dénudées, de 250 µm (valeur correspondant préférentiellement au diamètre de la fibre non dénudée). La dimension des rainures en V, quant à elle, dépend de la technologie de réalisation choisie. En particulier, en attaque chimique du silicium, les flancs des rainures forment un angle de 54,7° par rapport à la surface du substrat, la largeur d'ouverture des rainures est donc calculée en fonction.

Sur les figures, 4a à 4f, on peut voir un exemple d'un procédé de réalisation d'un élément à fibres optiques 202, dans lequel les fibres optiques 4.1 et 4.2 sont disposées parallèlement les unes par rapport aux autres, et sont contenues dans un plan P1 et dans un plan P2 respectivement, les plans P1 et P2 étant parallèles et non confondus. Dans ce cas, il apparaît que la réalisation d'un tel élément par les techniques classiques, a un coût de revient très élevé. La présente invention présente alors tout son intérêt.

La plaque de moulage 200 comporte des rainures 203 à section transversale en V, mais contrairement aux exemples précédents, les rainures 212.1,212.2 sont de profondeurs différentes. Dans l'exemple de l'élément à fibres optiques contenant deux plans P1, P2 de deux fibres optiques 4.1, 4.2, 1a plaque de moulage 200 comporte une première paire de rainures 212.1 de première profondeur h1, et une deuxième paire 212.2 de rainures de deuxième profondeur h2, h1 étant supérieure à h2. Ainsi, lors du démoulage, les fibres 4.1 sont disposées dans le plan P1, situé en dessous du plan P2 contenant les fibres 4.2.

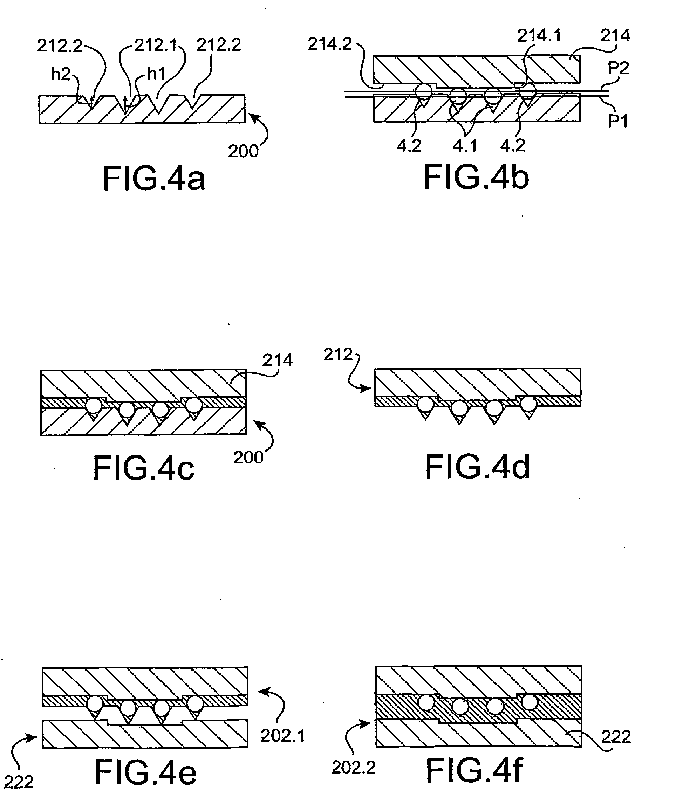

Sur la figure 4b, on peut voir une deuxième plaque support 214 comportant une face destinée à venir en contact avec les fibres optiques, délimitée par deux plans 214.1, 214.2 décalés de manière à suivre les fibres optiques 4.1,4.2 contenues dans les plans P1, P2 respectivement. De même, sur la figure 4f, dans le cas où une deuxième plaque support 222 est utilisée, celle-ci comporte également un profil adapté. On obtient (Figure 4e) un élément 202.1 muni d'une seule plaque support et un élément 202.2 (Figure 4f) muni de deux plaques supports de part et d'autre de la couche de résine.

Les étapes suivantes représentées en figures 4c à 4f sont analogues à celles décrites pour les exemples précédents.

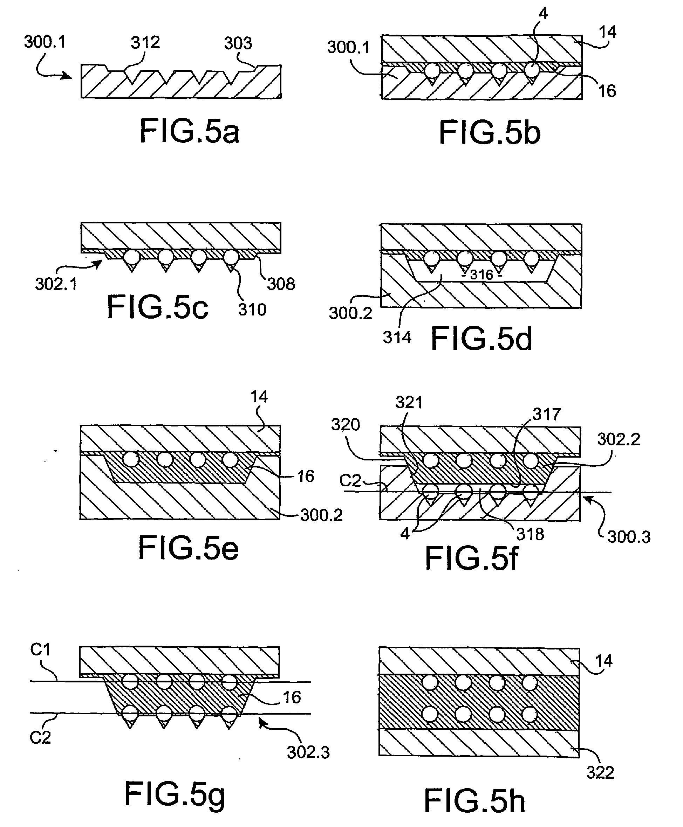

Sur les figures 5a à 5g, on peut voir un exemple de réalisation d'un élément 302 à fibres optiques réparties de manière matricielle ou dans des couches parallèles. Ce type d'élément est, selon les techniques connues, très problématique à réaliser, car les plaques supports dans lesquelles sont pratiquées les rainures en V, ne sont facilement usinables que sur une de leurs faces.

Le procédé selon la présente invention permet de réaliser un tel élément à répartition matricielle en n'utilisant que des plaques de moulage munies de rainures sur une seule face.

Sur les figures 5a et 5b, on peut voir une première plaque de moulage 300.1, munie d'une tranchée 303 dans le fond de laquelle sont pratiquées des rainures 312 à section en V. Des fibres optiques 4 sont disposées dans les rainures selon une première couche C1. Puis une plaque support 14 est disposée sur les fibres optiques. Ensuite, de la résine 16 est injectée entre la plaque de moulage 300.1 et la plaque support 14. La plaque de moulage 300.1 est ensuite enlevée. L'élément à fibres optiques intermédiaires 302.1 ainsi obtenu comporte sur une face 306 opposée à la plaque support 14, un profil en gradin 308 muni d'excroissances en forme de V 310 (Figure 5c).

Sur la figure 5d, on peut voir l'élément intermédiaire 302.1 disposé sur une deuxième plaque de moulage 300.2, le gradin 308 formant des moyens d'alignement de l'élément à fibres optiques intermédiaire par rapport à une tranchée 314 pratiquée dans la deuxième plaque de moulage 300.2. La tranchée 314 est munie d'un fond plan et de profondeur supérieure à la hauteur des excroissances en V 310.

L'élément intermédiaire 302.1 et la deuxième plaque 300.2 délimitent alors une cavité 316, dans laquelle est injectée de la résine à l'étape représentée à la figure 5e. Celle-ci est ensuite solidifiée tel que décrit précédemment. Un deuxième élément intermédiaire 302.2 est alors obtenu après démoulage, comportant une face plane 317 à l'opposé de la plaque support 14 (Figure 5f).

Sur la figure 5f, on peut voir une étape de réalisation d'une deuxième couche C2 de fibres optiques dans un plan parallèle à la première couche C2. Pour cela, le deuxième élément intermédiaire 302.2 est disposé dans une troisième plaque de moulage 300.3 ou moule. Le moule 300.3 comporte une tranchée 318, dans le fond de laquelle des rainures en V sont pratiquées et dans lesquelles des fibres optiques sont disposées. La face plane 317 du deuxième élément 302.2 vient en appui sur les fibres optiques, les fibres sont à nouveau maintenues en contact par trois points. De manière avantageuse, le deuxième élément intermédiaire 300.2 comporte des moyens d'alignement 320 coopérant avec des moyens d'alignement 321 du moule 300.3, permettant un positionnement précis et automatique du deuxième élément par rapport au moule. Dans l'exemple représenté, les moyens 321 sont formés par une première et une deuxième surface en biseau coopérant avec des faces de même inclinaison portées par le moule 300.3 et formant les moyens 322.

Ensuite, de la résine 16 est injectée entre le troisième moule 300.3 et le deuxième élément 302.2 intermédiaire, puis celle-ci est solidifiée. Un élément à fibres optiques 302.3 comportant une répartition de fibres optiques selon des couches parallèles C1 et C2 est obtenu après démoulage.

Une étape supplémentaire d'association avec une autre plaque support plane 322 pour rigidifier l'ensemble, peut être réalisée telle que déjà décrite (Figure 5h).

Dans l'exemple représenté, les tranchées ont avantageusement une section transversale trapézoïdale formant des moyens de guidage des éléments à fibres optiques dans les plaques de moulage lors des différentes étapes du procédé.

Il bien entendu que l'on peut réaliser plus de deux couches, il suffit pour cela de répéter les étapes 5d à 5f.

Le fait de modifier l'orientation des fibres d'une couche à l'autre, afin d'avoir par exemple une orientation orthogonale des fibres d'une couche par rapport à la suivante ne sort pas du cadre de la présente invention.

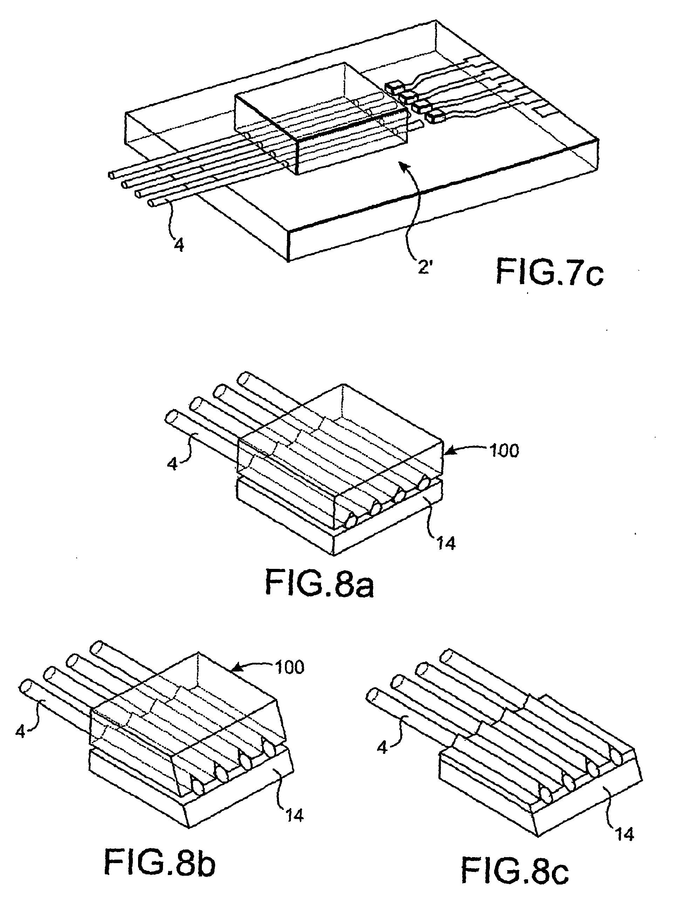

Sur la figure 7c, on peut voir un dispositif à fibres optiques de l'état de la technique muni d'un substrat formant une plaque support inamovible faisant corps avec l'élément 2' à fibres optiques. Le polissage collectif des fibres à leur extrémité n'est alors pas possible. Dans ce cas, il est donc prévu de cliver les fibres et de les amener à distance de la barrette de composants que l'on souhaite coupler. Le clivage induit, cependant, un léger angle qui fait que les extrémités des fibres ne sont pas toutes rigoureusement parallèles ce qui peut générer des dispersions sur les taux de couplage.

La présente invention propose une solution simple permettant un positionnement précis des fibres optiques par rapport à la barrette.

Sur les figures 7a et 7b, on peut voir un exemple de réalisation d'un dispositif 401 à fibres optiques, dans lequel un élément à fibres optiques obtenu selon un procédé conforme à l'invention est monté. L'élément 402 est similaire à celui obtenu lors des étapes représentées aux figures 2a à 2d. L'élément 402 comporte une partie en résine 404 dans laquelle sont noyées les fibres optiques muni sur une face d'une contre-lame 14 et sur une face opposée 406 d'excroissances en forme de V 408. Le dispositif 401 comporte un substrat 410 dans lequel sont pratiquées des rainures en V 412 correspondant au profil extérieur des excroissances 408 et identiques aux rainures du moule de fabrication 100. Les rainures 412 forment des moyens de positionnement précis de l'élément 402 par rapport au substrat 410.

Dans une étape suivante (Figure 7b), l'élément est collé sur le substrat structuré 410. Ce mode de réalisation garantit alors un alignement optimal des fibres par rapport au substrat 410 tout en permettant le polissage collectif des fibres avant le report de l'élément sur le substrat.

Le polissage de l'assemblage de fibres est effectué préférentiellement avant l'ablation de la plaque de moulage 100 de manière à éviter le décollement des fibres de la contre lame 14 ou la pollution des excroissance en V 408 par des résidus de polissage, ce qui perturberait le positionnement de l'élément à fibres optiques sur le substrat.

Sur les figures 8a à 8c, est explicité un avantage supplémentaire du procédé de réalisation selon la présente invention. Celui-ci permet ,de manière très avantageuse, de polir simultanément les fibres selon un plan formant un angle non droit avec la direction longitudinale des fibres 4, sans risque de modification de l'orientation des fibres les unes par rapport aux autres. Au contraire, dans les éléments à fibres optiques de l'état de la technique, il faut réaliser un polissage en biais individuel de chaque fibre puis disposer les fibres les unes par rapport aux autres en garantissant l'alignement des extrémités en biais des fibres optiques.

Le polissage pouvant s'effectuer sur des zones limitées de la plaque de moulage 100, la plaque de moulage 100 est réutilisable ultérieurement. Par ailleurs, il est également possible de polir la contre lame 14 avant assemblage, de sorte que seules les fibres optiques 4 soient polies à cette étape.

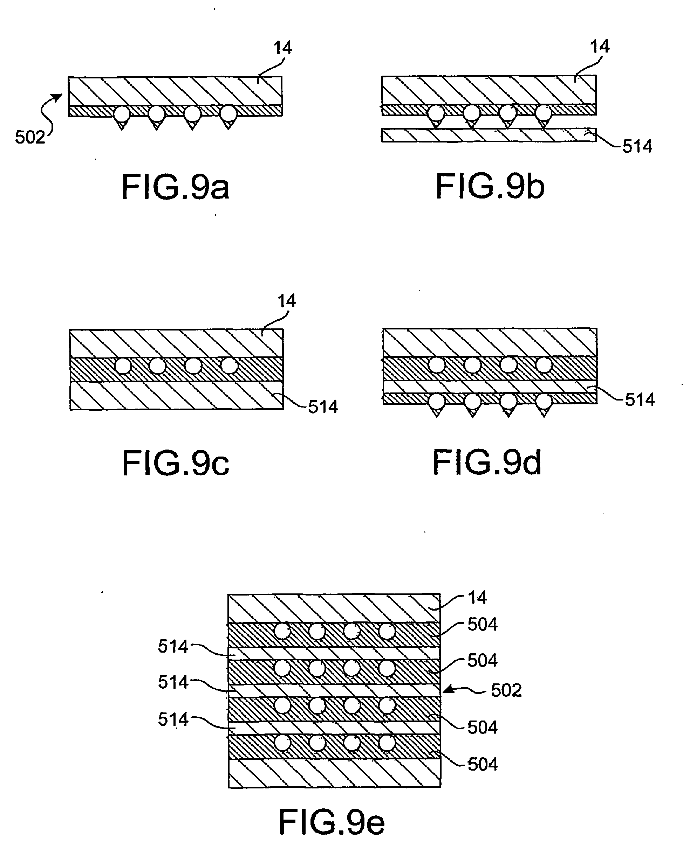

Sur les figures 9a à 9e, on peut voir la réalisation d'un élément 502 à fibres optiques ayant une structure matricielle en sandwich formée d'un empilement de structures de base 102. En d'autres termes, l'élément 502 comporte une alternance de couches de fibres optiques 504 maintenues par de la résine et une contre lame. Les étapes de réalisation correspondant à une répétition d'une séquence des étapes représentées en figures 2a à 2f, celles-ci ne seront donc pas décrites en détail.

Dans l'exemple représenté, deux types de contre lames sont utilisés, un premier type 14 tel que déjà décrit et délimitant les extrémités supérieure et inférieure de l'élément, et un deuxième type de contre lame 514 de plus faible épaisseur et destiné à être disposé entre deux couches de résine. Mais il est bien entendu que le fait d'utiliser un seul type de contre lame ne sort pas du cadre de la présente invention.

Ce mode de réalisation offre l'avantage de rigidifier l'élément à fibres optiques 502. De plus, ceci permet d'obtenir de manière simple un espacement régulier entre les couches de fibres.

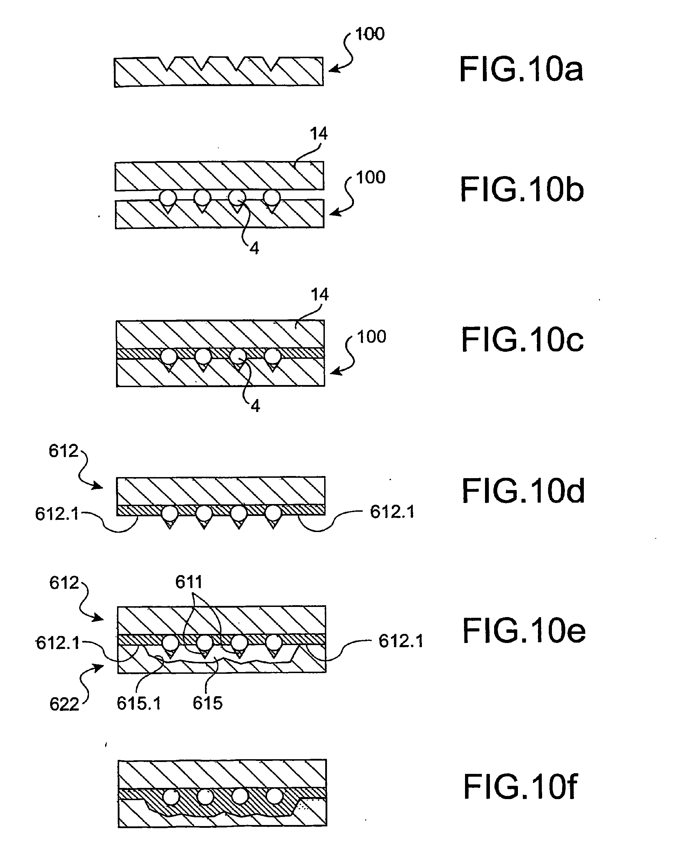

Sur les figures 10a à 10f, on peut voir les différentes étapes d'un autre exemple particulièrement avantageux d'un procédé selon la présente invention.

Les étapes représentées sur les figures 10a à 10d sont identiques à celles du procédé des figures 2a à 2f.

A l'étape 10e, on prévoit de rendre solidaire l'élément représenté sur la figure 10d, d'une plaque support 622, en garantissant un très bon alignement des plaques.

En effet, dans le procédé représenté sur les figures 2a à 2f, le parallélisme des plaques 14 et 22, et donc des plans des fibres par rapport à la plaque support et/ou à une structure de report, est obtenue par le contact des extrémités en pointe des nervures en saillie de l'élément 102, ces pointes étant contenues dans un plan parallèle à la plaque 14. Or, ces nervures en forme de V sont mécaniquement très fragiles. Il peut arriver qu'une des extrémité en pointe se brise ; le parallélisme entre les plans des fibres optiques et celui de la plaque support 22 ne peut alors plus être garanti.

Ce problème est particulièrement sensible dans le cas où l'on souhaite interface directement l'élément à fibres optiques, également appelé bloc de Vés fibrés, avec des composants optiques en regard, dans lequel des précisions de positionnement des fibres inférieures à 3 µm, voire inférieures à 1 µm peuvent être requises.

On prévoit alors d'utiliser une plaque support 622 munie d'une tranchée 615, de profondeur suffisante pour éviter un contact entre un fond 615.1 de la tranchée et les pointes 611, l'élément 612 ne reposant sur la plaque support 622 que par ses extrémités latérales 612.1 planes, assurant le parallélisme entre la plaque 14 et la plaque 622.

La tranchée peut être réalisée de manière très grossière et n'exige pas de précaution particulière, puisque la forme des parois n'intervient pas dans la précision du parallélisme. Ainsi, dans l'exemple représenté, la tranchée 615 a une forme très irrégulière, la réalisation peut alors être effectuée rapidement, en conservant un coût de réalisation faible.

La plaque support 622 peut être remplacée par une structure de report d'un dispositif optique.

Ce procédé offre également l'avantage de réduire la quantité de résine utilisée ; puisque le volume à remplir avec la résine est celui de la tranchée 615, et non celui de l'espace délimité entre la plaque support 22 et l'élément 102 de la figure 2, qui s'étend sur toute la largeur des plaques 22, 102.

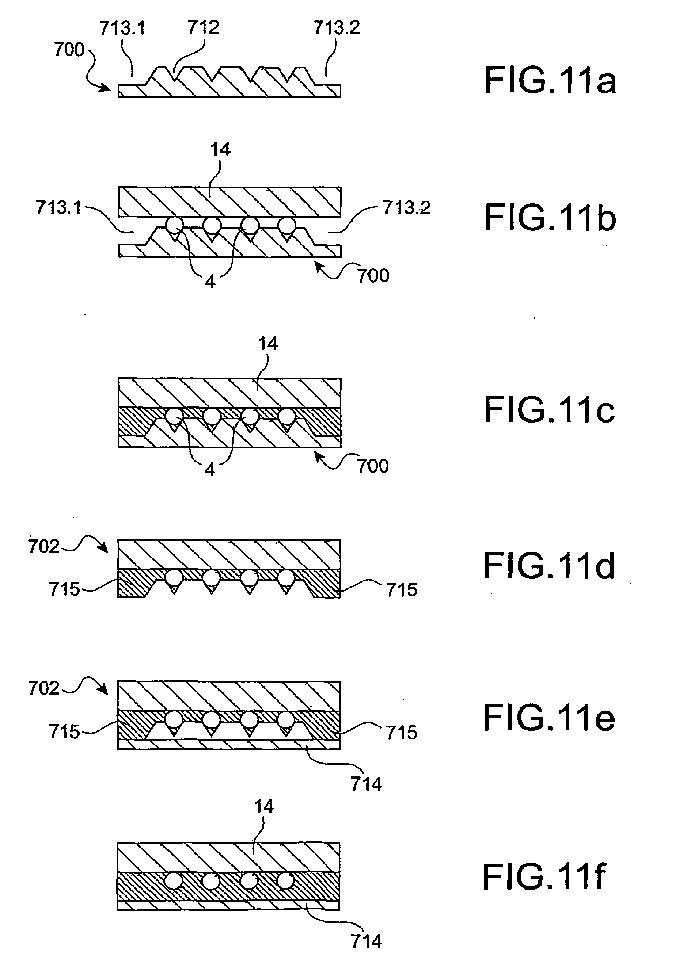

Sur les figures 11A à 11F, on peut voir encore un autre procédé de fabrication très avantageux, permettant de garantir le parallélisme entre une plaque support 714 et un élément 702.

Il est prévu, dans ce cas, d'utiliser une plaque de moulage 700 comportant des rainures 712 en V et une première et une deuxième rainure latérale 713.1, 713.2 parallèles aux rainures en V 712, les rainures 713.1, 713.2 ayant une profondeur supérieure à celle des rainures 712. En outre, celles-ci 713.1, 713.2 comportent un fond plat de manière à permettre le moulage de nervures à fond plat non fragiles.

Dans l'exemple représenté, les rainures 713.1, 713.2 sont disposées de part et d'autres des rainures en V, mais on peut prévoir de les disposer entre les rainures en V 712, si la répartition des fibres optiques le permet. En outre, on peut prévoir plus de deux rainures.

Les étapes de réalisation sont similaires à celles des étapes 2c à 2f. Cependant, lors de l'étape représentée sur la figure 11e, l'élément 702 repose sur la plaque support 714 sur des nervures 715 parallèles au nervures en V obtenues à partir des rainures 713.1, 713.2 de la plaque de moulage 700, et non sur les pointes des nervures en V.

Ce procédé pourra être utilisé pour la réalisation d'éléments à fibres optiques réparties en matrice sandwich comme celui de la figure 9e, en appliquant les étapes des figures 9a à 9e, avec une plaque de moulage 700 similaire à celle décrite ci-dessous.

Ainsi, une grande précision dans le positionnement relatif des couches de fibres optiques peut être obtenue grâce à cette variante de réalisation.

La combinaison des exemples de procédé selon la présente invention ou certaines de ces étapes uniquement, ne sort pas du cadre de la présente invention.

En outre, la présente invention ne se limite pas à une disposition parallèle des fibres, mais s'étend également à une disposition divergente ou convergente d'une ou plusieurs fibres par rapport aux autres.

De plus, l'utilisation des plaques de moulage munies de rainures à section transversale en U par exemple, ou toute autre forme assurant le positionnement souhaité de la fibre optique, ne sort pas du cadre de la présente invention.

## Revendications

1. Procédé de réalisation d'un élément (202.1, 202.2, 302.1, 302.2, 302.3, 502) muni de plusieurs fibres optiques (4) disposées de manière matricielle, comportant les étapes :
a) de mise en place et de maintien de fibres optiques (4) dans des rainures (212.1, 212.2, 312) pratiquées dans une plaque (200,300.1, 300.2, 300.3),
b) d'injection d'une matière durcissable (16) adhérant aux fibres (4),
c) de solidification de la matière durcissable pour figer les fibres dans la position fixée par les rainures,
d) de retrait de la plaque rainurée formant moule (200, 300.1, 300.2, 300.3) pour réaliser un élément intermédiaire,
e) de mise en place de fibres optiques dans des rainures pratiquées dans une plaque,
f) de mise en place de l'élément intermédiaire au dessus des fibres optiques mises en place à l'étape e),
g) d'injection d'une matière durcissable (16) adhérant aux fibres (4),
h) de solidification de la matière durcissable pour figer les fibres dans la position fixée par les rainures,
i) de retrait de la plaque rainurée formant moule (200,300.1, 300.2, 300.3).

2. Procédé selon la revendication 1, dans lequel les étapes e) à i) peuvent être répétées en utilisant l'élément obtenu à la fin de l'étape i) comme élément intermédiaire.

3. Procédé selon la revendication 1 ou 2, dans lequel la plaque (200, 300.1, 300.2, 300.3) utilisée dans les étapes a) à d) peut être identique ou différente de celle utilisée dans les étapes e) à i).

4. Procédé de réalisation d'un élément muni de plusieurs fibres optiques (4) disposées de manière matricielle, comportant les étapes :
a) de mise en place et de maintien de fibres optiques (4) dans des rainures (212.1, 212.2) pratiquées dans une plaque (200), lesdites rainures étant dans des plans différents,
b) d'injection d'une matière durcissable (16) adhérant aux fibres (4),
c) de solidification de la matière durcissable pour figer les fibres dans la position fixée par les rainures,
d) de retrait de la plaque rainurée formant moule (200).

5. Procédé selon l'une des revendications 1 à 4, comportant une étape de mise en place d'une plaque support sur les fibres optiques à l'opposée de la plaque avant l'injection de la matière durcissable.

6. Procédé selon l'une des revendications précédentes comportant également une étape de collage d'une plaque support (222, 322) en lieu et place de la plaque rainurée (200,300.1, 300.2, 300.3).

7. Procédé de réalisation selon l'une quelconque des revendications précédentes, dans lequel la matière durcissable (16) est une résine, dont la solidification se fait par insolation lumineuse ou chauffage de la matière durcissable (16).

8. Procédé selon la revendication précédente, dans lequel l'insolation lumineuse de la matière durcissable (16) s'effectue dans l'ultraviolet et dans lequel la plaque de moulage et/ou la plaque support est réalisée en matériau transparent aux rayons ultraviolets.

9. Procédé de réalisation selon l'une quelconque des revendications précédente, comportant une étape de collage de l'élément directement sur une structure de report (410) d'un dispositif optique (401).

10. Procédé de réalisation selon la revendication précédente, dans lequel la structure de report (410) comporte des rainures (412) correspondant aux rainures de la plaque de moulage, pour recevoir l'élément à fibres optiques, de manière à avoir une interpénétration de l'élément à fibres optiques (402) et de la structure (410) assurant un positionnement entre l'élémént à fibres optiques et la structure (410).

11. Procédé de réalisation selon la revendication 9, dans lequel l'interface entre la structure de report (24) et l'élément à fibres optiques est plane.

12. Procédé de réalisation selon l'une des revendications précédentes, comportant également une étape de polissage des extrémités des fibres optiques (4).

13. Procédé selon la revendication précédente, dans lequel l'étape de polissage des extrémités des fibres optiques (4) a lieu avant le retrait de là plaque formant moule (100, 200,300.1, 300.2, 300.3).

14. Dispositif de réalisation d'élément à fibres optiques répartis de manière matricielle, comportant au moins une plaque de moulage (200,) munie de rainures longitudinales (212.1, 212.2) sur une première face, ladite première face possédant des propriétés de faible adhésion vis-à-vis d'une matière durcissable destinée à être appliquée sur la plaque de moulage, dans lequel les rainures (212.1, 212.2) sont de profondeurs différentes de manière à définir des plans parallèles (P1, P2) distincts pour les fibres optiques (4).

15. Dispositif de réalisation d'élément à fibres optiques répartis de manière matricielle, comportant au moins une plaque de moulage (200,300.1, 300.2, 300.3) munie de rainures longitudinales (112, 212.1, 212.2, 312) sur une première face, ladite première face possédant des propriétés de faible adhésion vis-à-vis d'une matière durcissable destinée à être appliquée sur la plaque de moulage, dans lequel les rainures (312) se trouvent dans le fond d'une tranchée (303), ladite tranchée (303) formant sur la surface d'un premier élément à fibres optiques (302.1) des moyens de positionnement par rapport à une deuxième plaque de moulage (300.2).

16. Dispositif selon la revendication 14 ou 15, dans lequel la plaque de moulage (700) comporte également des deuxièmes rainures (713.1, 713.2) longitudinales de profondeur supérieure à celle des premières rainures longitudinales.

17. Dispositif selon la revendication 15, dans lequel la deuxième plaque de moulage (300.2) comporte une tranchée (314) à fond plan de manière à obtenir après moulage sur le premier élément à fibres optiques (302.1) d'une face plane, un deuxième élément à fibres optiques (302.2) muni d'une face plane.

18. Dispositif selon la revendication précédente, comportant une troisième plaque de moulage (300.3) munie d'une tranchée (318) à fond rainuré afin de recevoir des fibres optiques (4), la profondeur de la tranchée étant telle que lorsque le deuxième élément (302.2) est placé dans la tranchée, la face plane du deuxième élément (302.2) est en appui sur les fibres optiques (4).

19. Dispositif selon l'une des revendications 15 à 18, dans lequel les tranchées (303, 314, 318) ont une section transversale trapézoïdale.

20. Dispositif selon l'une des revendications 14 à 19, formé dans un substrat en silicium gravé chimiquement par photolithogravure ou au moyen d'une scie.

21. Dispositif selon l'une des revendications 14 à 20, dans lequel les plaques rainurées (200, 300.1, 300.2, 300.3) comportent des tranchées d'alimentation (18) en matière durcissable des rainures (212.1, 212.2, 312).

22. Elément à fibres optiques **caractérisé en ce qu'**il est obtenu par un procédé selon l'une quelconque des revendications 1 à 13.

23. Elément à fibres optiques selon la revendication précédente, dans lequel la plaque support (214) est en verre.

24. Elément à fibres optiques selon la revendication 22 ou 23, dans lequel la plaque support (622) comporte une tranchée (615) au droit des fibres optiques (4).

25. Elément à fibres optiques selon l'une des revendications 22 à 24, dans lequel la plaque support (214) comporte une face formée par au moins deux plans parallèles distincts et destinés à venir en appui sur les fibres optiques disposées dans des plans parallèles décalés correspondants.

26. Dispositif à fibres optiques comportant un élément selon l'une des revendications 22 à 25.

## Claims

1. Method for producing an element (102, 102.1, 202.1, 202.2, 302.1, 302.2, 302.3, 402, 502) provided with several optical fibers (4) 9. having a matrix disposal comprising the following steps:
a) placing and maintaining optical fibers (4) in grooves (112, 212.1, 212.2, 312) formed in a plate (100, 200, 300.1, 300.2, 300.3),
b) injecting a hardenable material (16) adhering to the fibers (4),
c) solidification of the hardenable material to freeze the fibers in the position set by the grooves,
d) removing at least the grooved plate forming the mould (100, 200,300.1, 300.2, 300.3) to achieve an intermediate element,
e) placing optical fibers in grooves formed in a plate,
f) placing the intermediate element on the optical fibers placed a the step e),
g) injecting a hardenable material (16) adhering to the fibers (4),
h) solidification of the hardenable material to freeze the fibers in the position set by the grooves,
i) removing the grooved plate forming the mould (100, 200, 300.1, 300.2, 300.3).

2. Method according to claim 1, wherein the steps e) to i) are repeated by using the element formed at the end of the step i) as intermediate element.

3. Method according to claim 1 or 2, wherein the plate (200, 300.1, 300.2, 300.3) used in the steps a) to d) may be the same as or different form the plate used in steps e) to i).

4. Method for producing an element made with several optical fibers (4) having a matrix disposal comprising the following steps:
a) placing and maintaining optical fibers (4) in grooves (212.1, 212.2) formed in a plate (200), said grooves being in different planes,
b) injecting a hardenable material (16) adhering to the fibers (4),
c) solidification of the hardenable material to freeze the fibers in the position set by the grooves,
d) removing the grooved plate forming the mould.

5. Production method according to one of the claims 1 to 4, comprising the step of placing a support plate on the optical fibers opposite the plate before injecting the hardenable material.

6. Method according to one of the preceding claims also comprising a step for gluing a support plate (22, 222, 322) instead and in place of the grooved plate (100, 200,300.1, 300.2, 300.3).

7. Production method according to one of the previous claims, wherein the hardenable material (16) is a resin, which solidification step is done by luminous insolation or heating of the hardenable material.

8. Method according to the preceding claim, wherein the luminous insolation of the hardenable material (16) is done in ultraviolet and the plate forming the mould and/or the support plate is made of a material transparent to ultraviolet rays.

9. Method according to one of the previous claims also comprising a step for gluing the element (102, 402) directly on a transfer structure (410) of an optical (401).

10. Production method according to previous claim, wherein the transfer structure (410) comprises grooves (412) corresponding to the grooves of the mould plate, to receive the optic fiber element (402) so as to have interpenetration between the optical fibers element (402) and the structure (410) ensuring positioning between the optical fibers element (402) and the structure (410).

11. Production method according to claim 9, wherein the interface between the transfer structure (24) and the optical fibers element (102) is flat.

12. Production method according to one of the previous claims, comprising a step for polishing the ends of the optical fibers (4).

13. Method according to the preceding claim, wherein the step for polishing the ends of the optical fibers (4) takes place before removal of the plate forming the mould (100, 200,300.1, 300.2, 300.3).

14. Device for producing an element made with several optical fibers (4) having a matrix comprising at least one mould plate (200) provided with longitudinal grooves (212.1, 212.2) on a first surface, said first surface has low adhesion properties with regard to the hardenable material intended to be injected between the mould plate, wherein the grooves (212.1, 212.2) have different depths to define distinct parallel planes (P1, P2) for the optical fibers.

15. Device for producing an element made with several optical fibers (4) having a matrix comprising at least one mould plate (100, 200,300.1, 300.2, 300.3, 712) provided with first longitudinal grooves (112, 212.1, 212.2, 312) on a first surface, said first surface has low adhesion properties with regard to the hardenable material intended to be injected between the mould plate and the support plate, wherein the grooves (312) are located in the bottom of a trench (303), said trench (303) forming, on the surface of a first optical fibers element (302.1), positioning means relative to a second mould plate (300.2).

16. Device according to the claim 14 or 15, wherein the mould plate (700) also comprises second longitudinal grooves (713.1, 713.2) which depth is greater than that of the first longitudinal grooves.

17. Device according to claim 15, wherein the second mould plate (300.2) comprise a trench (314) having a flat bottom so as to obtain, after moulding on the first fiber element (302.1) of a flat surface, a second optical fibers element (302.2) provided with the flat surface.

18. Device according to the preceding claim, comprising a third mould plate (300.3) provided with a trench (318) having a grooved bottom so as to receive optical fibers (4), the depth of the trench being such that when the second element (302.2) is placed in the trench, the flat surface of the second element (302.2) bears on the optical fibers (4).

19. Device according to one of the claims 15 to 18, wherein the trenches (303, 314, 318) have trapezoidal cross-section.

20. Device according to one of the claims 14 to 19, formed in a silicon substrate chemically etched by photolithography etching process or using a saw.

21. Device according to one of the claims 14 to 20, the grooved plate(s) (200, 300.1, 300.2, 300.3) comprise(s) trenches (18) for supplying the grooves (212.1, 212.2, 312) with hardenable material.

22. Optical fibers element **characterized in that** it is obtained through a method according to any of claims 1 to 13.

23. Optical fibers element according to the preceding claim, wherein the support blade is in glass.

24. Optical fibers element according to claim 22 or 23, wherein the support blade (622) comprises a trench (615) under of and in a straight line of the optical fibers (4).

25. Optical fibers element according to one of claims 22 to 24, wherein the support blade (214) comprises a surface formed by at least two offset parallel planes and intended to bear on the optical fibers disposed in the corresponding offset parallel planes.

26. Optical fibers device comprise an element according to one of claims 22 to 25.

## Patentansprüche

1. Verfahren zur Herstellung eines Elements (202.1, 202.2, 302.1, 302.2, 302.3, 502) mit mehreren matrixförmig angeordneten Lichtwellenleitern (4), die folgenden Schritte umfassend:
a) Einlegen und Festhalten der optischen Fasern (4) in Rillen (212.1, 212.2, 312), hergestellt in einer Platte (200, 300.1, 300.2, 300.3),
b) Einspritzen eines an den Lichtwellenleitern (4) haftenden härtbaren Materials (16),
c) Aushärtung des härtbaren Materials, um die Lichtwellenleiter in der durch die Rillen fixierten Position erstarren zu lassen,
d) Entfernen der eine Form bildenden gerillten Platte (200, 300.1, 300.2, 300.3), um ein Zwischenelement herzustellen,
e) Einlegen von Lichtwellenleitern in in einer Platte vorgesehene Rillen,
f) Anordnen des Zwischenelements auf in Schritt e) eingelegten Lichtweilenteitern,
g) Einspritzen eines an den Lichtwellenleitern (4) haftenden härtbaren Materials (16),
h) Aushärtung des härtbaren Materials, um die Lichtwellenleiter in der durch die Rillen fixierten Position erstarren zu lassen,
i) Entfernen der eine Form bildenden gerillten Platte (200, 300.1, 300.2, 300.3).

2. Verfahren nach Anspruch 1, bei dem die Schritte e) bis i) wiederholt werden können, indem man das am Enden von Schritt i) erhaltene Element als Zwischenelement benutzt.

3. Verfahren nach Anspruch 1 oder 2, bei dem die Platte (200, 300.1, 300.2, 300.3), benutzt in den Schritten a) bis d), gleich sein kann oder anders als die in den Schritten e) bis i) benutzte.

4. Verfahren zur Herstellung eines Elements mit mehreren matrixförmig angeordneten Lichtwellenleitern (4), die folgenden Schritte umfassend:
a) Einlegen und Festhalten der optischen Fasern (4) in Rillen (212.1, 212.2), hergestellt in einer Platte (200, 300.1, 300.2, 300.3), wobei sich die genannten Rillen in verschiedenen Ebenen befinden,
b) Einspritzen eines an den Lichtwellenleitern (4) haftenden härtbaren Materials (16),
c) Aushärtung des härtbaren Materials, um die Lichtwellenleiter in der durch die Rillen fixierten Position erstarren zu lassen,
d) Entfernen der eine Form bildenden gerillten Platte (200).

5. Verfahren nach einem der Ansprüche 1 bis 4, mit einem Schritt zum Anbringen einer Supportplatte auf den Lichtwellenleitern entgegengesetzt zu der Platte vor dem Einspritzen des härtbaren Materials.

6. Verfahren nach einem der vorhergehenden Ansprüche, mit ebenfalls einem Schritt zum Festkleben einer Supportplatte (222, 322) statt der gerillten Platte (200, 300.1, 300.2, 300.3).

7. Verfahren nach einem der vorhergehenden Anspruche, bei dem das härtbare Material (16) ein Harz ist, dessen Aushärtung durch Lichtbestrahlung oder Erwärmung des härtbaren Materials (16) erfolgt.

8. Verfahren nach dem vorhergehenden Anspruch, bei dem die Lichtbestrahlung des härtbaren Materials (16) im UV-Bereich erfolgt, und bei dem die eine Form bildende Platte und/oder die Supportplatte aus einem transparenten, für UV-Strahlen durchlässigen Material ist.

9. Verfahren nach einem der vorhergehenden Ansprüche, mit einem Schritt zum Festkleben des Elements direkt auf einer Übertragungsstruktur (410) einer optischen Vorrichtung (401).

10. Herstellungsverfahren nach dem vorhergehenden Anspruch, bei dem die Übertragungsstruktur (410) den Rillen der eine Form bildenden Platte entsprechende Rillen (412) umfasst, um das Lichtwellenleiterelement so aufzunehmen, dass das Lichtwellenleiterelement (402) und die Struktur (410) gegenseitig ineinander eindringen, dabei eine Positionierung zwischen dem Lichtwellenleiterelement und der Struktur (410) gewährleistend.

11. Herstellungsverfahren nach Anspruch 9, bei dem die Grenzfläche zwischen der Übertragungsstruktur (24) und dem Lichtwellenleiterelement eben ist.

12. Verfahren nach einem der vorhergehenden Ansprüche, mit ebenfalls einem Schritt zum Polieren der Enden der Lichtwellenleiter (4).

13. Herstellungsverfahren nach dem vorhergehenden Anspruch, bei dem der Schritt zum Polieren der Enden der Lichtwellenleiter (4) vor dem Entfernen der eine Form bilenden Platte (100, 200, 300.1, 300.2, 300.3) stattfindet.

14. Vorrichtung zur Herstellung eines Elements mit matrixförmig verteilten Lichtwellenleitern, mit wenigstens einer Formplatte (200) mit Längsrillen (212.1, 212.2) auf einer ersten Seite bzw. Fläche, wobei die genannte erste Seite bzw. Fläche schwache Hafteigenschaften gegenüber einem härtbaren Material bestimmt zur Aufbringung auf die Formplatte aufweist, deren Rillen (212.1, 212.2) unterschiedliche tief sind, so dass sie für die Lichtwellenleiter (4) verschiedene parallele Ebenen (P1, P2) definieren.

15. Vorrichtung zur Herstellung eines Elements mit matrixförmig verteilten Lichtwellenleitern, mit wenigstens einer Formplatte (200, 300.1, 300.2, 300.3)) mit Längsrillen (112, 212.1, 212.2, 312) auf einer ersten Seite bzw. Fläche, wobei die genannte erste Seite bzw. Fläche schwache Hafteigenschaften gegenüber einem härtbaren Material bestimmt zur Aufbringung auf die Formplatte aufweist, deren Rillen (312) sich im Boden eines Grabens (303) befinden, wobei der genannte Graben (303) an der Oberfläche eines ersten Lichtwellenleiterelements (302.1) Positionierungseinrichtungen in Bezug auf eine zweite Formplatte (300.2) bildet.

16. Vorrichtung nach Anspruch 14 oder 15, bei der die Formplatte (700) ebenfalls zweite Längsrillen (713.1, 713.2) von größerer Tiefe als derjenigen der ersten Längerillen umfasst.

17. Vorrichtung nach Anspruch 15, bei der die zweite Formplatte (300.2) einen Graben (314) mit ebenem Boden aufweist, so dass man nach dem Formen bzw. Einspritzen auf dem ersten Lichtwellenleiterelement (302.1) mit einer ebenen Fläche ein zweites Lichtwellenleiterelement (302.2) mit einer ebenen Fläche erhält.

18. Vorrichtung nach dem vorhergehenden Anspruch, mit einer dritten Formplatte (300.3), versehen mit einem Graben (318) mit - zur Aufnahme von Lichtwellenleitern (4) - gerilltem Boden, wobei die Tiefe des Grabens so ist, dass, wenn das zweite Element (302.2) in dem Graben platziert wird, die ebene Fläche des zweiten Elements (302.2) auf den Lichtwellenleitern (4) aufliegt.

19. Vorrichtung nach einem der Ansprüche 15 bis 18, bei der die Gräben (303, 314, 318) einen trapezförmigen Querschnitt haben.

20. Vorrichtung nach einem der Ansprüche 14 bis 19, ausgebildet in einem Siliciumsubstrat mittels Photolithographie oder mit Hilfe einer Säge.

21. Vorrichtung nach einem der Ansprüche 14 bis 20, bei der die gerillten Platten (200, 300.1, 300.2, 300.3) Gräben (18) zur Versorgung der Rillen (212.1, 212.2, 312) mit härtbarem Material umfassen.

22. Lichtwellenleiterelement, **dadurch gekennzeichnet, dass** es durch ein Verfahren nach einem der Ansprüche 1 bis 13 hergestellt wird.

23. Lichtwellenleiterelement nach dem vorhergehenden Anspruch, bei dem die Supportplatte (214) aus Glas ist.

24. Lichtwellenleiterelement nach Anspruch 22 oder 23, bei dem die Supportplatte (622) einen Graben (615) direkt unter den Lichtwellenleitern (4) umfasst.

25. Lichtwellenleiterelement nach einem der Ansprüche 22 bis 24, bei dem die Supportplatte (214) eine durch wenigstens zwei verschiedene parallele Ebenen gebildete Seite bzw. Fläche umfasst, die dazu bestimmt sind, sich auf den in versetzten parallelen Ebenen angeordneten entsprechenden Lichtwellenleitern abzustützen.

26. Lichtwellenleitervorrichtung mit einem Element nach einem der Ansprüche 22 bis 25.
